Europäisches Patentamt

(19) European Patent Office

Office européen des brevets

(11) Publication number: **0 176 158**

**A1**

(12) # EUROPEAN PATENT APPLICATION

(21) Application number: **85201524.7**

(22) Date of filing: **23.09.85**

(51) Int. Cl.⁴: **B 23 Q 41/00**
**//B25J5/00**

(30) Priority: **28.09.84 IT 2289584**

(43) Date of publication of application:
**02.04.86 Bulletin 86/14**

(84) Designated Contracting States:
**DE FR GB**

(71) Applicant: **ALFA ROMEO AUTO S.P.A.**
**Via Medina 40**
**I-80133 Napoli(IT)**

(72) Inventor: **Bassi, Aldo**
**Via Bodoni 2**
**I-20155 Milan(IT)**

(74) Representative: **Henke, Erwin et al,**
**Ing.Barzanò & Zanardo Milano S.p.A. Via Borgonuovo,**
**10**
**I-20121 Milano(IT)**

(54) **System for handling pallet-carrying trucks.**

(57) The system according to the invention is formed by a network of insulated conductors embedded in the floor of the working area and disposed in accordance with coordinates prechosen to define the points of said area, so that any position assumed by the pallet-carrying trucks can be determined and their movements in any required direction can also be controlled.

EP 0 176 158 A1

./...

Fig.1

## DESCRIPTION

This invention relates to a system for the automated handling and control of pallet-carrying trucks, which is formed in such a manner as to allow maximum freedom in the choice of the paths undergone by said trucks within the working area, and is consequently able to allow any path variation necessary, with path minimisation under any circumstances.

The increasingly widespread automation in the machining field requires the formation of areas in which various working stations, preferably in the form of automatic machine tools, are grouped in the most convenient manner, and in which the various operations required by the machining cycles are carried out on the workpieces under production.

Generally the workpieces arrive at the working stations arranged on pallets. Here they halt in a suitable parking zone, and are then transferred onto the machine tool which is to carry out the machining operation. Afterwards they pass to the subsequent working stations. The pallets are conveyed by trucks able to reach the various working stations, by moving automatically along determined paths.

The trucks can be guided by means of rails, by means of optical systems and bands painted on the floor, or by means of electromagnetic systems and electrical conductors set into the floor.

In all cases, the guides follow the course of the path scheduled for the trucks, and consequently when this has been determined at the design stage it is not possible to change it without moving the guides themselves.

It would therefore be extremely advantageous if the truck path could be varied according to requirements within the system area, to rapidly adapt to modifications in the machining cycles-and more particularly to diversification in the types of workpieces subjected to machining, as can happen in flexible production plants.

The object of the present invention is a system for the automated handling and control of pallet-carrying trucks in which the trucks can be made to move within the working area in any direction and along any path, under the control of a computer processing unit able to operate in real time.

This object is attained according to the invention by a system comprising several pallet-carrying trucks, each provided with a device for actuating the drive wheels and a device for actuating the steering wheels, a network of signal transmission lines disposed in the floor of said working area, and a computer processing unit operationally connected to said actuator devices and to the lines of said network, the system being characterised in that each of said trucks is also provided with a device able to emit pulse signals containing the truck indentification code, and in that said network is formed from signal transmission lines disposed in accordance with coordinates prechosen to define the points of said area.

According to a preferred embodiment, said emitter device comprises two electromagnets disposed substantially orthogonal to the floor and connected to a source of current pulsating at a determined frequency, which represents the truck identification code, and said transmission lines are constituted by insulated electrical conductors embedded in the floor and disposed along two substantially orthogonal directions.

On activating the electromagnets of a truck, voltage pulses are generated in the floor conductors closest to these particular electromagnets, by the effect of electromagnetic induction.

These pulse signals are processed by the computer in order to identify the pair of substantially orthogonal conductors which intersect at the closest point to each electromagnet of a truck, this enabling the computer to determine the coordinates of the position of the electromagnets and from these to determine the location and orientation of the truck in the working area.

Again according to a preferred embodiment, the computer memory contains the data relative to the map of the working area, and the data which define the machining cycle operations for the workpieces handled. On the basis of said data, the computer is able to establish the path which the truck, of which it has identified the code and location, must take in order to reach the station in which the workpieces carried by said truck are to undergo the operation scheduled for this particular stage of the machining cycle.

Thus in the case of even considerable modifications to the machining cycles effected in the area, only the relative data contained in the memory need be changed.

The commands for the actuating devices for the drive wheels and steering wheels of the truck to be handled are fed by the computer through radio or ultrasonic transmission systems, or through the actual electrical floor conductors, and are received by a suitable reception and sensing system mounted in the truck and operationally connected to said actuating devices.

Characteristics and advantages of the invention are illustrated reinafter with reference to the drawings which show a preferred embodiment of the invention by way of non-limiting example.

Figure 1 is a diagrammatic plan view of a system according to the invention;

Figure 2 shows a pallet-carrying truck of the system of Figure 1;

Figure 3 shows a modification of the truck of Figure 2.

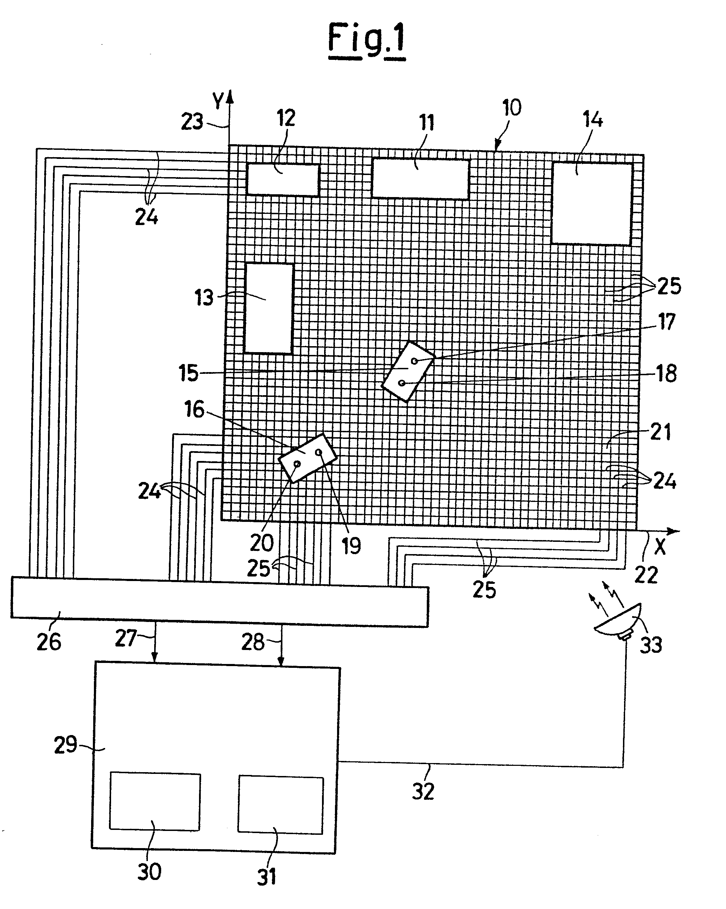

In Figure 1, the reference numeral 10 indicates overall a working area in which the numerically controlled machine tools indicated by 11, 12, 13 are located. The same area also comprises a store 14, in which the pallets are located containing the rough or semi-finished workpieces which are to be machined by the machine tools 11, 12, 13.

Two pallet-carrying trucks 15 and 16 are shown diagrammatically as present in the area 10, each of them being provided with a pair of electromagnets, indicated diagrammatically by 17 and 18, 19 and 20 respectively.

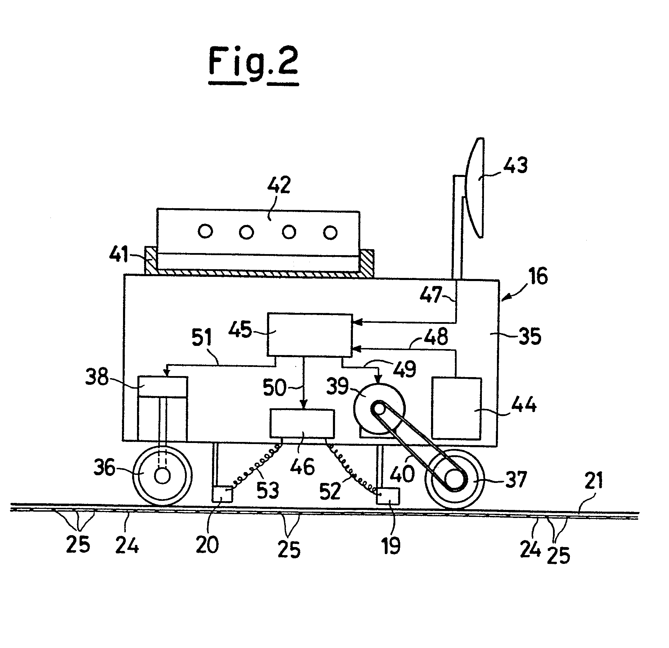

The electromagnets of each pair are disposed towards the ends of the relative truck, at a certain distance from the floor 21 and with their axes perpendicular thereto as shown in Figure 2.

A network of insulated electrical conductors disposed along two substantially orthogonal directions X and Y, indicated by the arrows 22 and 23, is embedded in the floor 21.

The conductors parallel to the X axis are indicated by 24 and those parallel to the Y axis are indicated by 25.

Both the conductors 24 and the conductors 25 are disposed at a distance apart which is chosen on the basis of the degree of accuracy required in determining the position of the trucks 15 and 16 within the area 10.

The conductors 24 and 25 are connected to the inputs of an interface unit indicated by 26, which comprises a multiplexer and possibly a microcomputer.

The interface 26 is connected by the lines 27 and 28 to a computer processing unit indicated by 29, which comprises a memory section (not shown) containing the operating programs, a memory section 30 with the data relative to the map of the working area, and a memory section 31 containing the data relative to the machining cycle operations to be carried out in the area 10.

The reference numeral 32 indicates the output line from the computer 29, through which the truck handling command signals are fed to a radiofrequency or ultrasonic transmitter, indicated by 33.

The pallet-carrying truck 16 shown in Figure 2 consists of a body 35 mounted on pairs of wheels 36 and 37. The pair of wheels 36 is operationally connected to a steering device 38, whereas the pair of wheels 37 is operationally connected to an electric motor 39 by way of a transmission 40.

The reference numeral 41 indicates a pallet supported by the truck 16, and 42 indicates a workpiece which is to be machined by one or all the machine tools 11, 12, 13 shown in Figure 1.

The reference numeral 43 indicates a receiver for the command signals originating from the transmitter 33 of Figure 1.

In the truck body 35 there are disposed a battery bank 44, a decoding centre 45 and a low-frequency pulsating electric current generator indicated by 46.

The centre 45 is operationally connected by the lines 47, 48, 49, 50, 51 to the receiver 43, the battery 44, the electric motor 39, the generator 46 and the steering device 38 respectively.

The generator 46 is also connected by the conductors 52 and 53 to the electromagnets 19 and 20.

The position of a truck, for example the truck 16, within the area 10 is determined as a result of the energisation of its electromagnets 19 and 20, to which the generator 46 feeds a current pulsating at a prechosen frequency.  In this respect, when the electromagnets are energised they induce a pulsating voltage in the electrical conductors 24 and 25 situated around them.

The signals originating from the conductors 24 and 25 enter the interface 26 where they are selected by a multiplexer and then fed in sequence to the computer 29 through the lines 27 and 28.

The computer executes a processing program which calculates the mean value of the pulsating signals orginating from the conductors 24 and 25 and compares the mean value of the signals with a predetermined threshold value.  This enables the signals emitted by the conductors closest to the electromagnets 19 and 20 to be identi- fied.

The aforesaid processing operations could also be performed by an auxiliary microcomputer disposed downstream of the multiplexer in the interface 26.

The computer, continuing to execute its operating program, then statistically programs the thus discriminated signals and calculates the maximum of the signal distribution curve or compares the absolute values of the signals in order to determine the maximum value, which pertains to the conductor closest to the electromagnet.

If the processing shows that two signals originating from the conductors 24 or 25 are equal, the computer determines that an electromagnet position is equidistant from the said two conductors 24 or 25.

The computer is thus able to identify the pairs of conductors 24 and 25 which intersect at the point closest to the electromagnets 19 and 20 of the truck 16, and consequently is able to determine the coordinates of the position of the electromagnets, from which the location and orientation of the truck 16 within the area 10 can be obtained.

By examining the data contained in the memory section 31 relating to the machining cycles, the computer 29 establishes the operation scheduled for the workpiece 42 carried by the truck 16 in the particular stage of the relative machining cycle, and identifies the machine tool which has to be reached by this truck. With this information, and on the basis of the data contained in the memory section 30, the computer is able to define with reference to the map of the working area the most convenient path to enable the truck 16 to reach the determined working station.

The computer 29 then establishes the types of commands necessary for making the truck 16 undergo the determined path.

These commands, which contain the code of the truck 16 and the code of the relevant actuator device, ie electric motor 39 or steering device 38, are fed by means of the line 32 and transmitter 33 to the receiver 43 of the said truck, and from here to the decoding centre 45 which adapts them and directs them either to the motor 39 or to the steering device 38, in order to move the truck along the determined path.

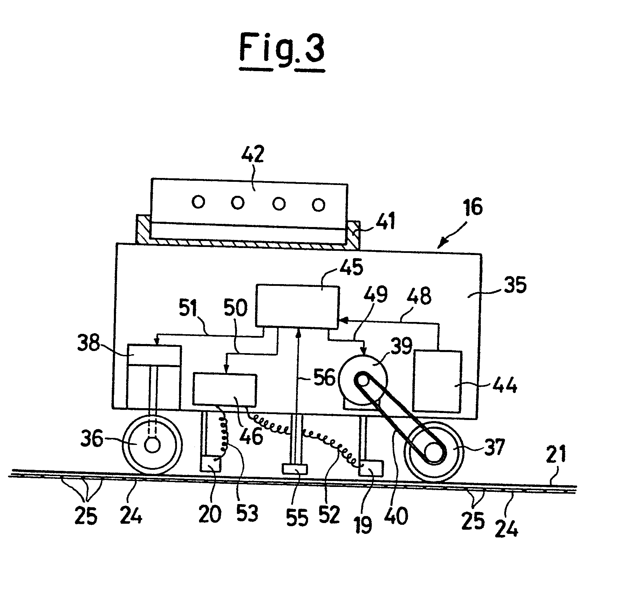

The system can be rapidly adapted to changed production conditions, even if changing to other types of workpieces to be produced, it being necessary only to modify the data contained in the memory section 31 relative to the machining cycles and the data contained in the memory section 30 relative to the map of the working area. The truck 16 shown in Figure 3 differs from that shown in Figure 2 only in that the receiver 43 is absent, but instead a sensor 55 is provided which enables it to pick up the command signals when fed by the computer 29 through the conductors 24 and 25, it being connected to the centre 45 by the line 56. In this case, in the system shown in Figure 1 the output line 32 from the computer 29 would be connected to the interface 26 and not to the transmitter 33, because the command signals for the trucks 15 and 16, after being frequency-modulated and suitably adapted, are now to be fed to the respective sensors through the actual conductors 24 and 25 which are used to establish the position of the trucks.

CLAIMS

1.     A system for handling pallet-carrying trucks within a working area provided with machine tools arranged to perform the machining operations required by the manufacturing cycles for the workpieces processed within the said area, the system comprising several pallet-carrying trucks, each provided with a device for actuating the drive wheels and a device for actuating the steering wheels, a network of signal transmission lines disposed in the floor of said working area, and a computer processing unit operationally connected to said actuator devices and to the lines of said network, the system being characterised in that each of said trucks is also provided with a device able to emit pulse signals containing the truck identification code, and in that said network is formed from signal transmission lines disposed in accordance with coordinates prechosen to define the points of said area.

2.     A system as claimed in claim 1, characterised in that the emitter device of each truck comprises two electromagnets disposed substantially athogonal to the floor and connected to a source of current pulsating at a determined frequency, which represents the truck identificaiton code, and the transmission lines are constituted by insulated electrical conductors embedded in the floor and disposed along two substantially orthogonal directions.

3.     A system as claimed in claim 1, characterised in that the computer is operationally connected to the lines of said network by means of an interface unit comprising a multiplexer.

4.     A system as claimed in claim 3, characterised in that said interface unit also comprises a microcomputer.

5. A system as claimed in claim 1, characterised in that said computer is operationally connected to said actuator devices of each truck by a transmitter which transmits signals at a determined frequency, and by a receiver and decoding centre which are supported on the respective truck.

6. A system as claimed in claim 3, characterised in that said computer is operationally connected to said interface unit by an output line which conveys the frequency-modulated command signals for the actuator devices of each truck.

7. A system as claimed in claim 1, characterised in that said computer is provided with memory sections containing the data relative to the map of the working area, and the data which define the machining cycle operations for the workpieces handled.

Fig.1

Fig.2

# Fig.3

**European Patent Office**

**EUROPEAN SEARCH REPORT**

| | DOCUMENTS CONSIDERED TO BE RELEVANT | | EP 85201524.7 |
|---|---|---|---|

| Category | Citation of document with indication, where appropriate, of relevant passages | Relevant to claim | CLASSIFICATION OF THE APPLICATION (Int Cl 4) |
|---|---|---|---|
| A | US - A - 3 909 922 (TAKASAKI)<br>* Abstract *<br>-- | 1 | B 23 Q 41/00<br>/B 25 J 5/00 |
| A | DE - A1 - 3 246 828 (FRAUNHOFER)<br>* Claim 1; page 6 *<br>-- | 1 | |
| A | EP - A2 - 0 109 201 (THE FRANKLIN)<br>* Fig. 5,9; abstract; page 18, lines 17-21 *<br>-- | 1 | |
| A | EP - A2 - 0 043 208 (HITACHI)<br>-- | | |
| A | GB - A - 2 045 463 (HALL)<br>---- | | |

|  | TECHNICAL FIELDS SEARCHED (Int Cl 4) |
|---|---|
| | B 25 J 5/00 |
| | B 25 J 9/00 |
| | B 25 J 11/00 |
| | B 25 J 19/00 |
| | B 25 J 21/00 |
| | B 65 G 35/00 |
| | B 65 G 37/00 |
| | B 23 Q 41/00 |

The present search report has been drawn up for all claims

| Place of search | Date of completion of the search | Examiner |
|---|---|---|
| VIENNA | 16-12-1985 | LEBZELTERN |